# EUROPEAN PATENT SPECIFICATION

(11) **EP 4 048 576 B1**
(45) Date of publication and mention of the grant of the patent: **11.02.2026**
(21) Application number: 20797082.3
(22) Date of filing: 22.10.2020
(51) Int. Cl.: B62D 35/00, B62D 37/02

(54) **METHOD AND SYSTEM FOR POSITIONING AIR DEFLECTOR USING DISTANCE MEASUREMENT**
VERFAHREN UND SYSTEM ZUM POSITIONIEREN EINES LUFTDEFLEKTORS UNTER VERWENDUNG VON DISTANZMESSUNG
PROCÉDÉ ET SYSTÈME DE POSITIONNEMENT DE DÉFLECTEUR D'AIR EN UTILISANT UNE MESURE DE DISTANCE

(30) Priority: 23.10.2019 SE 1951200
(43) Date of publication of application: 31.08.2022
(73) Proprietor: Rumblestrip AB, 412 92 Göteborg (SE)
(72) Inventor: KRISTIANSSON, Gustav, 590 77 Vreta Kloster (SE); PERSSON, Andreas, 117 58 Stockholm (SE)
(74) Representative: AWA Sweden AB
(86) International application number: PCT/EP2020/079750
(87) International publication number: WO 2021/078858

(56) References cited:
- WO-A1-2007/004953
- WO-A1-2011/075009
- WO-A1-2017/108076
- DE-A1- 102008 056 357
- DE-A1- 102014 018 850
- GB-A- 2 551 656
- US-A1- 2011 241 377

## Description

### Technical Field

The disclosure is related to a method for optimizing a position of an air deflector guiding an airflow around a vehicle, more specifically a ground automotive vehicle, during driving in order to minimize air drag and fuel consumption. The disclosure is also related to an air deflector system of a vehicle.

### Background

Vehicles, such as heavy trucks carrying a load and trucks towing a trailer, are often equipped with air guiding devices, air deflectors, located on the roof of the truck cab and/or on respective lateral sides of the truck cab, for reducing air drag during journey and thereby reducing fuel consumption of the vehicle.

When travelling, vehicles displace air, and for a vehicle carrying load or towing a trailer which extends upwards and/or sideways beyond the vehicle, the front surface of extended parts of the load or trailer will cause significant air drag. The air deflector, if correctly aligned, redirects the air which is moving over the moving vehicle in such a way that the air does not hit the front edge of the trailer or the load carried by the vehicle but instead the air is moving over the roof or along the sides of the carried load or the trailer. Further, an air deflector positioned too high will also cause an increased air drag.

The dimensions of trailers and of load carried by the vehicle often vary, why for optimal reduction of the air drag, the air deflector should be adjustable and adjusted for each truck-load or truck-trailer combination.

There are methods in which the air deflector is positioned in line with the top edge of the load or trailer, which top edge has been identified using an optical sensor. However, positioning the air deflector based on the edge may not provide the optimal position of the air deflector. The error to the optimal position may cause unnecessary increase of fuel consumption of up to ca 2 % compared to having the air deflector at the actual optimal position.

Examples for such air deflectors are discloses in WO 2007/004953 A1, US 2011/241377 A1, WO 2017/108076 A1 and DE 10 2008 056357 A1.

Consequently, there is a need for a technique of finding the optimal position of an air deflector based on an identified edge of a load or trailer.

### Summary

It is an object of the present invention to provide an improved solution that alleviates the mentioned drawbacks with present devices. Furthermore, it is an object to provide a method and a system for positioning an air deflector at the optimal position to reduce air drag.

The invention is defined by the appended independent claims, with embodiments being set forth in the appended dependent claims, in the following description and in the drawings.

According to a first aspect of the present invention, a method of controlling the position of an air deflector moveably attached to a vehicle is provided, the vehicle carrying a load or towing a trailer. The method comprises the steps of moving the air deflector, measuring, using at least one distance sensor arranged on the air deflector, a distance to the load or trailer during movement of the air deflector, positioning the air deflector at a first position at which the at least one distance sensor identified an edge of the load or trailer, and adjusting the position of the air deflector from the first position to an optimum position using a mapping scheme with the first position of the air deflector as main input.

The present invention provides a method for finding and positioning the air deflector at the optimal position starting with an identification of an edge of the load or trailer, and positioning the air deflector at the first position at which the distance sensor is in line with the edge. The air deflector may be arranged on the roof of the vehicle, or on the side of the vehicle. The edge of the load or trailer may be a top edge for an air deflector arranged on the roof of the vehicle, or a side edge for an air deflector arranged on the side of the vehicle.

Since the first position in line with the edge in many cases is not the optimal position, air drag and fuel consumption may be reduced by adjusting the air deflector position from the first position to the actual optimal position. The mapping scheme may be used as a basis for the adjustment of the position. The mapping scheme may be provided as a look-up table, providing a level of adjustment in a certain direction, based on the first position of the air deflector, i.e. the position of the air deflector at which the edge of the load or trailer was identified. The first position input signal may be provided to the mapping scheme as represented by an angle of the air deflector relative the roof or side of the vehicle, the distance between a point on the air deflector to the roof or side of the vehicle, the extension of an actuator controlling the movement of the air deflector, or the like.

The mapping scheme may provide a relationship between the position provided by the distance sensor identifying the edge of the load or trailer, and the actual optimal position of the air deflector, under certain conditions provided by the main input signal to the mapping scheme. The first position is used as a parameter into the mapping scheme to have the output from the mapping scheme determined, providing the actual optimal position of the air deflector. The mapping scheme itself may have been provided using an exponential function, a polynomial function, a look-up table, a filter, such as a Kalman filter, or a machine learning algorithm trained to understand the relationship between the first position and the optimal position. Such mapping scheme may then be used in the method in the present invention. There are several possible machine learning algorithms that may be used, such as linear regression, Naïve Bayesian regression, regression trees, and artificial neural networks.

The distance sensor may measure from a back edge of the air deflector towards the load or trailer.

The first position may be used as main input signal to the mapping scheme, providing the only input to the mapping scheme. In embodiments may one or more additional input signals be used in the mapping scheme.

In one embodiment, the distance between the air deflector and the load or trailer may be used as an additional input to the mapping scheme.

The distance sensor measuring the distance to the load or trailer, and thereby identifying when reaching an edge of the load or trailer, may further provide the distance measured as an additional input signal to the mapping scheme. By providing an additional input signal to the mapping scheme, the selection of level and direction of adjustment of the air deflector position from the first position may be further fine-tuned. The distance to the load or trailer used as additional input signal to the mapping scheme may be the distance to the edge, or to another point on the load or trailer, e.g. the point at which the shortest distance is measured. When having an additional input signal to the mapping scheme, such as the distance to the load or trailer, the mapping scheme may be provided as a multi-variable look-up table, exponential function, polynomial function, filter, such as a Kalman filter, or machine learning algorithm to provide a level and direction of adjustment of the air deflector.

In one embodiment, the method further may comprise a step of measuring the current speed of the vehicle, and wherein the measured current speed of the vehicle may be used as an additional input to the mapping scheme, or as basis to provide other information to be used as an additional input to the mapping scheme.

Information about the speed of the vehicle may be provided from a speed sensor in or attached to the vehicle, and may provide a speed signal to be used as an additional input signal to the mapping scheme. By providing an additional input signal to the mapping scheme, the selection of level and direction of adjustment of the air deflector position from the first position may be further fine-tuned. Alternatively, or additionally, the information of the speed of the vehicle may be used as a safety function by preventing movement of the air deflector if the speed of the vehicle is below a predetermined level. For instance, movement of the air deflector may be prevented when the vehicle is standing still, to make sure the air deflector is not moved when a person is in the area of the air deflector, thereby avoiding the risk of personal injuries.

In one embodiment, the method may further comprise a step of measuring a wind direction on the vehicle, and wherein the detected wind direction on the vehicle may be used as an additional input to the mapping scheme.

The vehicle may be provided with a sensor, such as a wind sensor, identifying the direction of wind that comes towards the vehicle. Such sensor may provide the wind direction which may provide a wind direction signal to be used as an additional input signal to the mapping scheme. By providing an additional input signal to the mapping scheme, the selection of level and direction of adjustment of the air deflector position from the first position may be further fine-tuned. The wind direction may in one embodiment be provided as an angle of the direction from which the wind comes relative to a longitudinal axis of the vehicle or relative to a forward moving direction of the vehicle.

In one embodiment, the method may further comprise a step of determining the position of the vehicle using a global navigation or positioning system, and wherein the determined position of the vehicle may be used as an additional input to the mapping scheme, or as basis to provide other information to be used as an additional input signal to the mapping scheme.

The vehicle may be provided with a sensor providing a position signal of the vehicle, such as a GPS signal or other type of navigation signal identifying the vehicle's global position. Such position signal may be used as an additional input signal to the mapping scheme, and thereby further improve the accuracy of the adjustment of the air deflector position. There may be conditions at certain global locations that provide a different optimal air deflector position compared to other locations. The adjustment of the air deflector position may thereby be compensated for such differences. Alternatively, or additionally, the position information may be used as an indirect input signal to the mapping scheme. Such use may be by limiting a maximum height position that the air deflector may be positioned based on the vehicle position. This may be used to follow local regulation about maximum vehicle height at the present location of the vehicle, or to prevent collision with known obstacles providing a maximum possible height of the vehicle. Further, the vehicle position information may be indirectly used for the adjustment of the air deflector by receiving wind and/or weather information, such as wind direction, based on the vehicle position, which wind and/or weather information may be used as additional input signal to the mapping scheme.

In one embodiment, information of the type of load or trailer carried or towed by the vehicle may be provided and used as an additional input to the mapping scheme.

By providing the type of load or trailer as input signal to the mapping scheme, the adjustment of the air deflector may be done with further accuracy since the type of load or trailer may affect the actual optimal position of the air deflector starting from the same first position. For instance, there may be different adjustments needed to reach the optimal position if the trailer is a tank trailer or a curtainside trailer.

In one embodiment, the distance sensor may be an optical sensor.

An optical sensor may be an effective way of measuring the distance to the load or trailer. Such optical sensor may for instance be a laser sensor or infrared sensor. In another embodiment, the optical sensor may be provided as a camera using software to identify the distance in the camera image.

In one embodiment, the at least one distance sensor may comprise at least two distance sensors arranged such that at least one distance sensor may be directed towards the load or trailer when the air deflector is positioned in the optimal position.

When using two distance sensors, one distance sensor may be arranged to identify the edge of the load or trailer, and the other distance sensor may be arranged to always measure the distance to the load or trailer. In this way, the presence of the load or trailer may always be identified. In a situation where one distance sensor has been used to identify the edge, and after adjustment of the air deflector position to the optimal this distance sensor does no longer identify the load or trailer, the other distance sensor may be used to identify if the load or trailer is removed. A removal of the load or trailer affects in which position the air deflector should be. An identification that no load or trailer is attached to the vehicle may trigger a repositioning of the air deflector.

In one embodiment, the identification of whether the load or trailer still is present behind the vehicle may be performed using the one distance sensor. The distance sensor may be arranged such that the direction of measurement is possible to redirect, either by temporarily moving the air deflector, or by redirecting the measurement direction of the distance sensor. The distance sensor measurement may thereby periodically or at a certain condition be redirected to measure towards the load or trailer to determine whether such is still present. This may be performed at least when the optimal position of the air deflector provides that the distance sensor does not measure the distance to the load or trailer. The certain condition may be based on one or more of time, position of the vehicle, and the speed of the vehicle.

In one embodiment, the mapping scheme may provide information of an optimal position for the air deflector based on the input signal(s) provided to the mapping scheme.

The mapping scheme may provide information for the adjustment of the air deflector position from the first position to the optimal position. The mapping scheme, with the first position as main input signal, and possibly further additional input signals, may provide a new position or a level of adjustment for the air deflector.

In one embodiment, the mapping scheme is provided as an exponential function, a polynomial function, a look-up table, a filter, such as a Kalman filter, or a machine learning algorithm trained for the relationship between the first position and the optimal position.

The selection of technique for the mapping scheme may be based on the number of input signals to the mapping scheme. When only one or a few input signals are provided to the mapping scheme, such as only the first position, or the first position and the distance to the load or trailer, it may be beneficial with an exponential function, a look-up table, or a polynomial function, since those are less complex and thereby may provide a fast determination of the optimum position. In a case when more variables are provided as input signals to the mapping scheme, a look-up table, exponential function, or polynomial function may be difficult or impossible to use. In such case, a machine learning algorithm may be more suitable.

The mapping scheme itself may be formed in different ways, with the common purpose of determining the connections between possible input signal or signals and the output, being the optimum position. These connections may be found by evaluating the air resistance for a range of different air deflector positions, using different vehicle configurations of e.g. vehicle roof height, vehicle width, load or trailer width or height, distance to load or trailer, type of load or trailer. This may be done by CFD simulations, wind tunnel tests or driving tests under controlled conditions. With such information gathered, a table, function or algorithm as discussed above may be formed and used.

According to a second aspect of the present invention, an air deflector system of a vehicle for guiding an airflow around the vehicle during driving is provided, the vehicle carrying a load or towing a trailer. The air deflector system comprises an air deflector which is moveably attachable to the vehicle, an electrically drivable actuator configured to adjust the position of the air deflector relative to the vehicle, at least one distance sensor arranged on the air deflector and configured to measure the distance to the load or trailer, a controller configured to control the actuator to move the air deflector and during such movement receive distance data from the distance sensor, and to position the air deflector in a first position at which the distance sensor identified an edge of the load or trailer, wherein the controller is further configured to adjust the position of the air deflector from the first position to an optimal position using a mapping scheme with the first position as main input signal.

The air deflector system may in further embodiments comprise means or elements, or be configured to operate, similarly to the embodiments discussed above.

### Brief Description of the Drawings

The invention will in the following be described in more detail with reference to the enclosed drawings, wherein:
Figs. 1a-1c are schematic side-views of a truck-trailer combination provided with an air deflector located on the roof of the truck cab.
Fig. 2a is a schematic side-view of a truck cab with an air deflector arranged on the truck cab roof.
Fig. 2b is a schematic top-view of a truck cab with a roof-mounted air deflector and air deflectors arranged on both lateral sides of the truck cab.
Figs. 3a-c are schematic side views of a truck-trailer combination provided with an air deflector on the roof of the truck cab.
Fig. 4 show a flow chart of a method according to an embodiment of the present invention.
Fig. 5 show a flow chart of a method according to an embodiment of the present invention.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

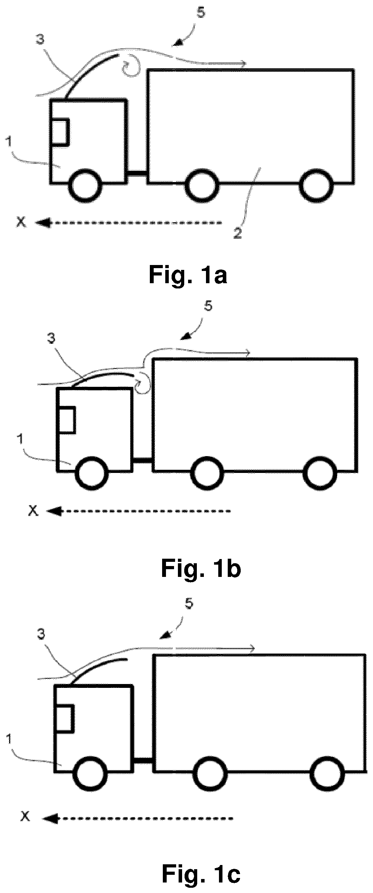

For an automotive ground vehicle such as a truck 1 carrying a load or towing a trailer 2, see Figs. 1a-1c, the front surface of extended parts of the load or trailer 2 will cause significant air drag during journey. Such air drag also occurs for example when a car tows a caravan.

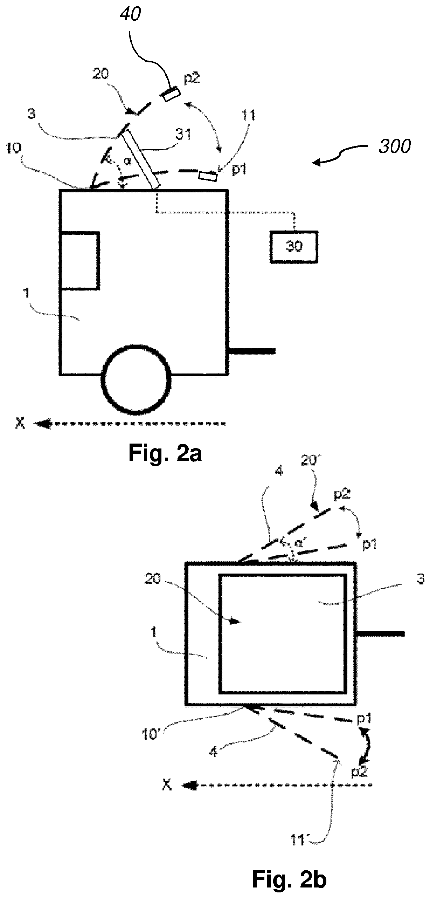

For reducing the air resistance of the vehicle and to reduce fuel consumption the truck cab 1 may be provided with a roof-mounted air deflector 3 (see Figs 1a-1c and Fig. 2a) and/or side air deflectors 4 mounted on each lateral side of the truck cab 1 (Fig. 2b) for hiding the frontal face area of the trailer/load 2 from an oncoming airflow and to get a more streamlined complete vehicle. All functions and features disclosed herein regarding a roof-mounted air deflector 3 apply correspondingly to a side-mounted air deflector 4, and vice verse.

Factors that may affect the air resistance are mainly wind direction and wind speed in relation to the vehicle and geometrical factors, namely height and width of the driver's cab 1 relative to the height and width of the trailer 2/load as well as the distance between truck 1 and trailer 2.

The air deflector 3, 4, comprises a major essentially planar air-deflecting surface 20, 20', which has a first edge 10, 10' and a second edge 11, 11' essentially opposite the first edge 10, 10' across the major air-deflecting surface 20, 20'. When arranged on the truck cab 1, see Figs 1a-1c and Figs 2a and 2b, the air deflector 3, 4 is arranged to be pivotable around its first edge 10, 10' to form an angle of inclination α, α' of the air-deflecting surface 10, 10' to a direction X parallel with the normal forward direction of the moving vehicle. When the angle of inclination α, α' is changed the second edge 11, 11' is correspondingly translated from one position to another position.

The air deflector 3, 4 may have a first extreme position in which the angle of inclination α, α' is low, e.g. about 0°-15°, and a second extreme position in which the angle of inclination α, α' is high, e.g. about 20°-60°.

For a side-mounted air deflector 4, see Fig. 2b, the second edge 11' is pivoted around the first edge 10' forwards and inwards relative to the side of the vehicle forming an angle α' relative to the longitudinal axis X.

For a roof-mounted air deflector 3, see Fig. 2a, the second edge 11 is pivoted around the first edge 10 upwards and downwards relative to the roof of the truck cab forming an angle α relative to the longitudinal axis X.

The air deflector 3, 4 may be mounted by means of a frame (not shown) to the truck cab 1 and the air deflector 3, 4 may be moveable with respect to the frame.

The vehicle, when travelling, will be subject to load from the air, where the load from the air depends on the angle of inclination α, α' of the air-deflecting surface 20, 20' and on the condition of the air deflector 3, 4 relative to the load/trailer. Load due to air that flows against the air-deflecting surface 20, 20' of the air deflector 3, 4 increases as the angle relative to the direction X increases.

In Fig. 1a the roof-mounted air deflector 3 is adjusted to a condition such that the second end 11 of the roof-mounted air deflector 3 is positioned too high relative to the trailer 2. The air flowing 5 off the second edge 11 of the air deflector 3 may provide an unnecessary large air resistance, since the air deflector 3 is at a steeper position than needed to direct the air flow 5 above the edge of the trailer 2.

In Fig. 1b the second edge 11 of the air deflector 3 is too low. This part of the trailer will produce a stagnation of a part of the flow 5. The stagnation of the flow may force an increased air quantity into the cavity and thus create an increased pressure in the cavity and the air drag on the vehicle as compared to an optimally positioned air deflector (see Fig. 1c).

In Fig. 1c the second end 11 of the air deflector 3 is positioned such that the air flow 5 is directed to move optimally above the edge of the trailer 2. The air then may flow smoothly over the air guide and further above the roof of the trailer 2. In this optimal position the airflow 5 is guided around the vehicle during driving, i.e. the air deflector 3 redirects the air which is moving over the moving vehicle in such a way that the air does not hit the front edge of the trailer 2 but instead the air is moving over the roof of the trailer 3. At the same time, the air deflector 3 is not positioned too high to unnecessarily increase the air resistance.

The same effects are seen for a truck carrying a load having a width extending beyond the width of the truck cab. If the load or towed trailer 2 extends laterally outwards of the truck cab 1 the optimal position of the air deflectors on the side of the vehicle 1 is when the second end 11' of the air deflector 4 is positioned such that the air flow 5 is directed to move optimally past a side edge of the trailer 2.

Even small angular variations in the settings of the deflectors 3, 4 may have significant effect on the total vehicle air resistance.

The dimensions of trailers and of load carried by a vehicle often vary, why for optimal reduction of the air drag, the air deflector(s) 3, 4 should be adjustable.

Traditionally, air deflectors 3, 4 have been manually adjustable. It is, however, desirable to, automatically, during driving of the vehicle, be able to identify and position the air deflector 3, 4 for any truck-trailer or truck-load combination in an optimum position or close to optimum position, in which position the air drag is the lowest.

Fig. 2a further illustrates a controller 30 and an actuator 31, which is in communication with the controller 30.

The actuator 31 may be any type of actuator that is capable of setting the position/orientation of the air deflector 3, 4, such as a linearly operating actuator or an angularly operating actuator.

For example, the actuator 31 may be an electrically driven actuator, and in particular one that is drivable by direct current, as that is what is in many cases most readily available in vehicles.

To set the air deflector 3, 4 to the optimum position, a method is performed to find the optimum position and to position the air deflector 3, 4 at said position.

The method may be automatically run, for example when a vehicle after a certain time period of stand-still starts again, when the load or trailer 2 has been changed and/or when the vehicle reaches a certain speed (such as for example 20km/h). Alternatively, a driver of a truck could start the optimizing method manually by pushing a button.

The air deflector 3, 4 is moved, "swept", from a lowest p1, p1' towards a highest position p2, p2' when the vehicle is either standing still or moving in a forward direction 100. Here, the lowest position is the position with the smallest angle of inclination α, α' of the air-deflecting surface 20, 20' of the air deflector 3, 4 to a direction X parallel with the normal forward direction and the highest position is a position of largest angle of inclination α, α'.

It is to be understood that the movement of the air deflector may be made in the opposite direction, i.e. from the highest position towards the lowest position.

The air deflector 3, 4 may be moved from the lowest p1, p1' towards the highest position p2, p2' by means of an electric actuator 30. The electric actuator 30 may comprise an electro-mechanical actuator, an alternating current motor selected from a group comprising an induction motor, a synchronous motor, a sliding rotor motor and a repulsion motor, or a direct current motor selected from a group comprising a brushed motor and a brushless motor.

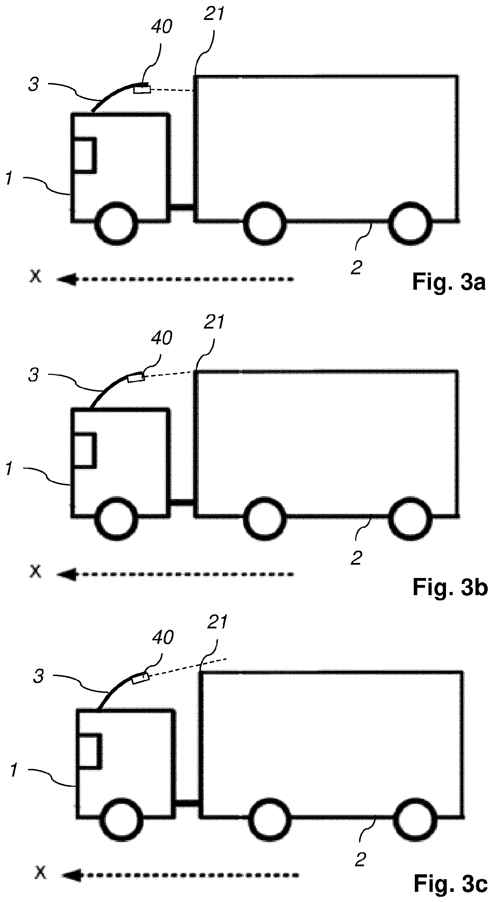

In an embodiment of the present invention, as illustrated in figures 3a-c, a distance sensor 40, such as a laser or other optical sensor, is arranged at the second end 11, 11' of the air deflector 3. The distance sensor 40 measures the distance to the load or trailer 2 behind the vehicle 1. The controller 30 uses the actuator 31 to move the air deflector 3, and the distance sensor 40 to measure the distance to the load or trailer 2 at different positions of the air deflector 3. If starting at the lowest position p1, p1' of the air deflector 3 and moving the air deflector 3 upwards, the distance sensor 40 may identify a top edge 21 of the load or trailer 2 when the distance to the load or trailer at a sudden point increases rapidly, or becomes out or range. The controller 30 uses this input from the distance sensor 40 to stop the movement of the air deflector 3 and position the air deflector 3 at a first position.

The controller 30 may alternatively start from the highest position p2, p2' of the air deflector 3 and move the air deflector 3 downwards until the load or trailer 2 becomes within measurable range of the distance sensor 40, thereby identifying the top edge 21 of the load or trailer.

Fig. 3a illustrates the situation when the distance sensor 40 measures the distance to the load or trailer 2. Fig. 3b illustrates the point where the top edge 21 of the load or trailer 2 is identified. Fig. 3c illustrates a position of the air deflector 3 above the position where the distance sensor has identified the top edge 21 of the trailer 2, and measures a distance out or range.

When the controller has positioned the air deflector 3 at the first position after the identification of the top edge 21 of the load or trailer 2, the controller 30 will use a mapping scheme to adjust the position of the air deflector 3 from the first position to an optimal position. The first position of the air deflector 3 is used as main input signal to the mapping scheme. In one embodiment, wherein the position of the air deflector is controlled using an electrical actuator 31, the position of the electrical actuator 31 may be used to represent the first position of the air deflector 3.

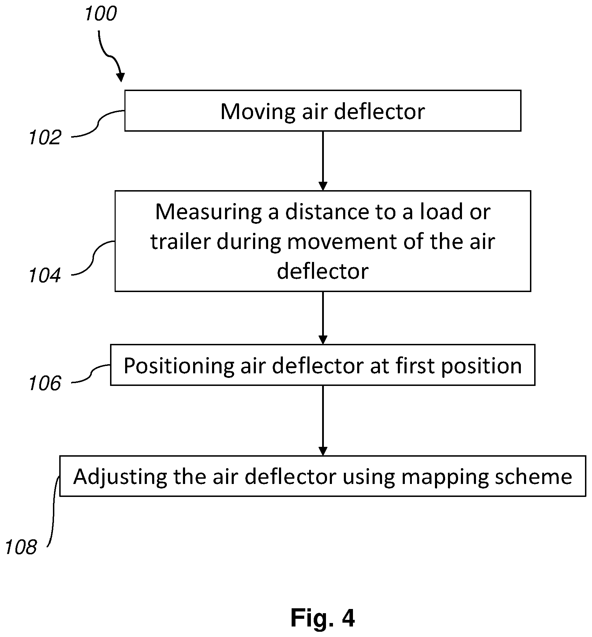

Fig. 4 illustrates a flow chart of a method 100 according to an embodiment of the present invention. The method 100 comprises the steps of moving 102 the air deflector 3, wherein a distance sensor 40 is arranged on the moving air deflector 3. During the movement of the air deflector 3, the distance sensor 40 measures 104 the distance to a load or trailer 2 behind the vehicle 1. When an edge 21 (top edge or side edge) of the load or trailer 2 is identified using the distance measurement, the air deflector 3 is positioned 106 at a first position. Thereafter, the air deflector position is adjusted 108 from the first position to an optimal position using a mapping scheme with the first position as main input signal.

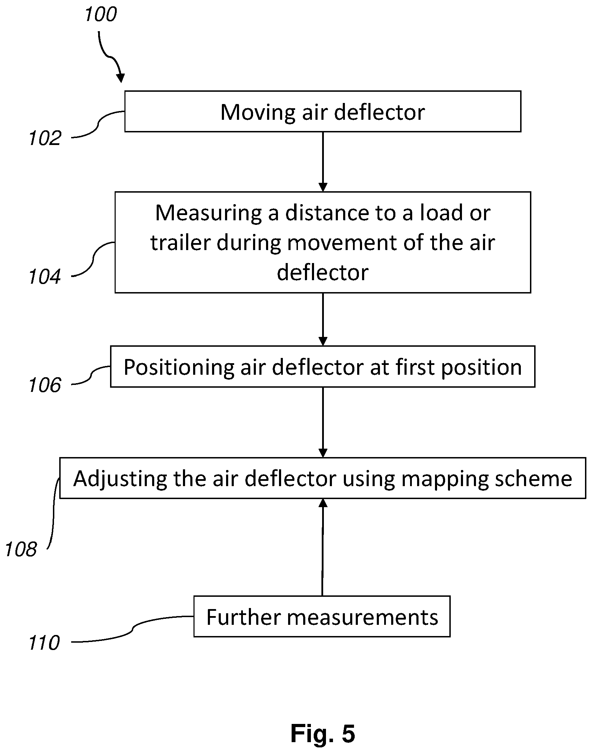

In one embodiment, as illustrated in the flow chart of fig. 5, further additional input signals may be provided to the mapping scheme for the adjustment 108 of the air deflector 3 from the first position to the optimal position. These additional input signals may come from further measurements **110,** such as the current speed of the vehicle 1, the wind direction on the vehicle 1, or the position of the vehicle 1 using a global navigation or positioning system used directly or indirectly for other information as input signal. As an additional input signal to the mapping scheme, the type of load or trailer may be used.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A method (100) of controlling the position of an air deflector (3) moveably attached to a vehicle (1), the vehicle carrying a load or towing a trailer (2), the method comprising the steps of:
moving (102) the air deflector (3),
measuring (104), using at least one distance sensor (40) arranged on the air deflector, a distance to the load or trailer (2) during movement of the air deflector,
positioning (106) the air deflector at a first position at which the at least one distance sensor (40) identified an edge (21) of the load or trailer, and
adjusting (108) the position of the air deflector (3) from the first position to an optimal position using a mapping scheme with the first position of the air deflector as a main input.

2. The method according to claim 1, wherein the distance between the air deflector (3) and the load or trailer (2) is used as an additional input to the mapping scheme.

3. The method according to claim 1 or 2, wherein the method further comprises a step of measuring (110) the current speed of the vehicle, and wherein the measured current speed of the vehicle is used as an additional input to the mapping scheme, or as basis to provide other information to be used as an additional input signal to the mapping scheme.

4. The method according to any of the preceding claims, wherein the method further comprises a step of measuring a wind direction towards the vehicle, and wherein the detected wind direction is used as an additional input to the mapping scheme.

5. The method according to any of the preceding claims, wherein the method further comprises a step of determining the position of the vehicle using a global navigation or positioning system, and wherein the determined position of the vehicle is used as an additional input to the mapping scheme or as basis to provide other information to be used as an additional input signal to the mapping scheme.

6. The method according to any of the preceding claims, wherein the at least one distance sensor (40) comprises at least two distance sensors arranged such that at least one of the at least two distance sensors is directed towards the load or trailer when the air deflector is positioned in the optimal position.

7. The method according to any of the preceding claims, wherein the mapping scheme provides information of the optimal position for the air deflector (3) based on the input signal(s) provided to the mapping scheme.

8. The method according to any of the preceding claims, wherein the mapping scheme is provided as an exponential function, a polynomial function, a look-up table, a filter, such as a Kalman filter, or a machine learning algorithm trained for the relationship between the first position and the optimal position.

9. An air deflector system (300) of a vehicle (1) for guiding an airflow (5) around the vehicle during driving, the vehicle carrying a load or towing a trailer (2), the air deflector system comprising
an air deflector (3, 4) which is moveably attachable to the vehicle,
an electrically drivable actuator (31) configured to adjust the position of the air deflector relative to the vehicle,
**characterized in that** the air deflector system further comprising
at least one distance sensor (40) arranged on the air deflector and configured to measure the distance to the load or trailer,
a controller (30) configured to control the actuator (31) to move the air deflector and during such movement receive distance data from the distance sensor, and to position the air deflector in a first position at which the distance sensor identified an edge (21) of the load or trailer,
wherein the controller is further configured to adjust the position of the air deflector (3) from the first position to an optimal position using a mapping scheme with the first position as a main input.

10. The system according to claim 10, wherein the controller (30) is configured to use the distance between the air deflector (3) and the load or trailer (2) as an additional input to the mapping scheme.

11. The system according to any of the claims 10-11, wherein the system further comprises means for measuring a current speed of the vehicle, and wherein the controller (30) is configured to use the detected current speed of the vehicle as an additional input to the mapping scheme, or as basis to provide other information to be used as an additional input signal to the mapping scheme.

12. The system according to any of the claims 10-11, wherein the system further comprises means for measuring a wind direction towards the vehicle (1), and wherein the controller (30) is configured to use the detected wind direction as an additional input to the mapping scheme.

13. The system according to any of the claims 10-12, wherein the system further comprises means for determining the position of the vehicle (1) using a global navigation or positioning system, and wherein the controller (30) is configured to use the determined position of the vehicle as an additional input to the mapping scheme, or as basis to provide other information to be used as an additional input signal to the mapping scheme.

14. The system according to any of the claims 10-13, wherein the at least one distance sensor (40) comprises at least two distance sensors arranged such that at least one distance sensor is directed towards the load or trailer (2) when the air deflector is positioned in the optimal position.

15. The system according to any of the claims 10-14, wherein the mapping scheme is provided as an exponential function, a polynomial function, a look-up table or a machine learning algorithm trained for the relationship between the first position and the optimal position.

## Patentansprüche

1. Verfahren (100) zum Steuern der Position eines Windabweisers (3), der beweglich an einem Fahrzeug (1) angebracht ist, wobei das Fahrzeug eine Last trägt oder einen Anhänger (2) zieht, wobei das Verfahren die Schritte umfasst:
Bewegen (102) des Windabweisers (3),
Messen (104), unter Verwendung mindestens eines an dem Windabweiser angeordneten Abstandssensors (40), eines Abstands zu der Last oder dem Anhänger (2) während der Bewegung des Windabweisers,
Positionieren (106) des Windabweisers an einer ersten Position, an welcher der mindestens eine Abstandssensor (40) eine Kante (21) der Last oder des Anhängers identifiziert hat, und
Verstellen (108) der Position des Windabweisers (3) von der ersten Position zu einer optimalen Position unter Verwendung eines Abbildungsschemas mit der ersten Position des Windabweisers als Haupteingabe.

2. Verfahren nach Anspruch 1, wobei der Abstand zwischen dem Windabweiser (3) und der Last oder dem Anhänger (2) als zusätzliche Eingabe für das Abbildungsschema verwendet wird.

3. Verfahren nach Anspruch 1 oder 2, wobei das Verfahren ferner einen Schritt des Messens (110) der aktuellen Geschwindigkeit des Fahrzeugs umfasst und wobei die gemessene aktuelle Geschwindigkeit des Fahrzeugs als zusätzliche Eingabe für das Abbildungsschema verwendet wird, oder als Basis, um andere Informationen bereitzustellen, die als zusätzliches Eingangssignal für das Abbildungsschema verwendet werden sollen.

4. Verfahren nach einem der vorhergehenden Ansprüche, wobei das Verfahren ferner einen Schritt des Messens einer Windrichtung in Richtung auf das Fahrzeug umfasst und wobei die erfasste Windrichtung als zusätzliche Eingabe für das Abbildungsschema verwendet wird.

5. Verfahren nach einem der vorhergehenden Ansprüche, wobei das Verfahren ferner einen Schritt des Bestimmens der Position des Fahrzeugs unter Verwendung eines globalen Navigations- oder Positionsbestimmungssystems umfasst und wobei die bestimmte Position des Fahrzeugs als zusätzliche Eingabe für das Abbildungsschema verwendet wird, oder als Basis, um andere Informationen bereitzustellen, die als zusätzliches Eingangssignal für das Abbildungsschema verwendet werden sollen.

6. Verfahren nach einem der vorhergehenden Ansprüche, wobei der mindestens eine Abstandssensor (40) mindestens zwei Abstandssensoren umfasst, die so angeordnet sind, dass mindestens einer der mindestens zwei Abstandssensoren zur Last oder zum Anhänger hin gerichtet ist, wenn der Windabweiser in der optimalen Position positioniert ist.

7. Verfahren nach einem der vorhergehenden Ansprüche, wobei das Abbildungsschema Informationen der optimalen Position für den Windabweiser (3) basierend auf dem (den) Eingangssignal(en), das (die) dem Abbildungsschema zugeführt wird (werden), bereitstellt.

8. Verfahren nach einem der vorhergehenden Ansprüche, wobei das Abbildungsschema als eine Exponentialfunktion, eine Polynomialfunktion, eine Nachschlagetabelle, ein Filter wie etwa ein Kalman-Filter oder ein maschineller Lernalgorithmus, der für die Beziehung zwischen der ersten Position und der optimalen Position trainiert wird, bereitgestellt wird.

9. Windabweisersystem (300) eines Fahrzeugs (1) zum Leiten eines Luftstroms (5) um das Fahrzeug während der Fahrt, wobei das Fahrzeug eine Last trägt oder einen Anhänger (2) zieht, wobei das Windabweisersystem umfasst:
einen Windabweiser (3, 4), der beweglich an dem Fahrzeug anbringbar ist,
einen elektrisch antreibbaren Aktuator (31), der dafür ausgelegt ist, die Position des Windabweisers relativ zum Fahrzeug zu verstellen,
**dadurch gekennzeichnet, dass** das Windabweisersystem ferner umfasst:
mindestens einen Abstandssensor (40), der an dem Windabweiser angeordnet ist und dafür ausgelegt ist, eine Abstand zu der Last oder dem Anhänger zu messen,
eine Steuereinheit (30), die dafür ausgelegt ist, den Aktuator (31) zu steuern, um den Windabweiser zu bewegen und während dieser Bewegung Abstandsdaten von dem Abstandssensor zu empfangen, und den Windabweiser in einer ersten Position zu positionieren, an welcher der Abstandssensor eine Kante (21) der Last oder des Anhängers identifiziert hat,
wobei die Steuereinheit ferner dafür ausgelegt ist, die Position des Windabweisers (3) von der ersten Position zu einer optimalen Position unter Verwendung eines Abbildungsschemas mit der ersten Position des Windabweisers als Haupteingabe zu verstellen.

10. System nach Anspruch 9, wobei die Steuereinheit (30) dafür ausgelegt ist, den Abstand zwischen dem Windabweiser (3) und der Last oder dem Anhänger (2) als zusätzliche Eingabe für das Abbildungsschema zu verwenden.

11. System nach einem der Ansprüche 9-10, wobei das System ferner Mittel zum Messen einer aktuellen Geschwindigkeit des Fahrzeugs umfasst und wobei die Steuereinheit (30) dafür ausgelegt ist, die erfasste aktuelle Geschwindigkeit des Fahrzeugs als zusätzliche Eingabe für das Abbildungsschema zu verwenden, oder als Basis, um andere Informationen bereitzustellen, die als zusätzliches Eingangssignal für das Abbildungsschema verwendet werden sollen.

12. System nach einem der Ansprüche 10-11, wobei das System ferner Mittel zum Messen einer Windrichtung in Richtung auf das Fahrzeug (1) umfasst und wobei die Steuereinheit (30) dafür ausgelegt ist, die erfasste Windrichtung als zusätzliche Eingabe für das Abbildungsschema zu verwenden.

13. System nach einem der Ansprüche 10-12, wobei das System ferner Mittel zum Bestimmen der Position des Fahrzeugs (1) unter Verwendung eines globalen Navigations- oder Positionsbestimmungssystems umfasst und wobei die Steuereinheit (30) dafür ausgelegt ist, die bestimmte Position des Fahrzeugs als zusätzliche Eingabe für das Abbildungsschema zu verwenden, oder als Basis, um andere Informationen bereitzustellen, die als zusätzliches Eingangssignal für das Abbildungsschema verwendet werden sollen.

14. System nach einem der Ansprüche 10-13, wobei der mindestens eine Abstandssensor (40) mindestens zwei Abstandssensoren umfasst, die so angeordnet sind, dass mindestens ein Abstandssensor zur Last oder zum Anhänger (2) hin gerichtet ist, wenn der Windabweiser in der optimalen Position positioniert ist.

15. System nach einem der Ansprüche 10-14, wobei das Abbildungsschema als eine Exponentialfunktion, eine Polynomialfunktion, eine Nachschlagetabelle oder ein maschineller Lernalgorithmus, der für die Beziehung zwischen der ersten Position und der optimalen Position trainiert wird, bereitgestellt wird.

## Revendications

1. Procédé (100) de commande de la position d'un déflecteur d'air (3) fixé de manière mobile à un véhicule (1), le véhicule transportant une charge ou tractant une remorque (2), le procédé comprenant les étapes suivantes :
le déplacement (102) du déflecteur d'air (3),
la mesure (104), à l'aide d'au moins un capteur de distance (40) disposé sur le déflecteur d'air, d'une distance jusqu'à la charge ou la remorque (2) pendant le déplacement du déflecteur d'air,
le positionnement (106) du déflecteur d'air à une première position à laquelle le capteur de distance (40) a identifié un bord (21) de la charge ou de la remorque et
l'ajustement (108) de la position du déflecteur d'air (3) de la première position à une position optimale à l'aide d'un schéma de cartographie utilisant la première position du déflecteur d'air comme entrée principale.

2. Procédé selon la revendication 1, dans lequel la distance entre le déflecteur d'air (3) et la charge ou la remorque (2) est utilisée comme entrée supplémentaire pour le système de cartographie.

3. Procédé selon la revendication 1 ou 2, dans lequel le procédé comprend en outre une étape de mesure (110) de la vitesse actuelle du véhicule et dans lequel la vitesse actuelle mesurée du véhicule est utilisée comme entrée supplémentaire pour le système de cartographie ou comme base pour fournir d'autres informations pouvant servir de signal d'entrée supplémentaire au système de cartographie.

4. Procédé selon une quelconque des revendications précédentes, dans lequel le procédé comprend en outre une étape de mesure de la direction du vent en direction du véhicule et dans lequel la direction du vent détectée est utilisée comme entrée supplémentaire pour le système de cartographie.

5. Procédé selon une quelconque des revendications précédentes, dans lequel le procédé comprend en outre une étape de détermination de la position du véhicule à l'aide d'un système global de navigation ou de positionnement et dans lequel la position déterminée est utilisée comme entrée supplémentaire pour le système de cartographie ou comme base pour fournir d'autres informations servant de signal d'entrée supplémentaire au système de cartographie.

6. Procédé selon une quelconque des revendications précédentes, dans lequel le au moins un capteur de distance (40) comprend au moins deux capteurs de distance disposés de telle sorte qu'au moins un d'eux soit dirigé vers la charge ou la remorque lorsque le déflecteur d'air est positionné dans la position optimale.

7. Procédé selon une quelconque des revendications précédentes, dans lequel le système de cartographie fournit des informations sur la position optimale du déflecteur d'air (3) à partir du ou des signaux d'entrée fournis au système de cartographie.

8. Procédé selon une quelconque des revendications précédentes, dans lequel le schéma de correspondance est fourni sous la forme d'une fonction exponentielle, d'une fonction polynomiale, d'une table de consultation, d'un filtre, tel qu'un filtre de Kalman ou d'un algorithme d'apprentissage automatique entraîné pour la relation entre la première position et la position optimale.

9. Système de déflecteur d'air (300) d'un véhicule (1) destiné à guider un flux d'air (5) autour du véhicule pendant la conduite, le véhicule transportant une charge ou tractant une remorque (2), le système de déflecteur d'air comprenant :
un déflecteur d'air (3, 4) qui est fixable de manière amovible au véhicule,
un actionneur électrique (31) configuré pour ajuster la position du déflecteur d'air par rapport au véhicule,
**caractérisé en ce que** le système de déflecteur d'air comprend en outre :
au moins un capteur de distance (40) disposé sur le déflecteur d'air et
configuré pour mesurer la distance jusqu'à la charge ou la remorque, un contrôleur (30) configuré pour commander l'actionneur (31) afin de
déplacer le déflecteur d'air et, pendant un tel déplacement, de recevoir les données de distance du capteur de distance et positionner le déflecteur d'air dans une première position à laquelle le capteur de distance a identifié un bord (21) de la charge ou de la remorque,
dans lequel le contrôleur est en outre configuré pour ajuster la position du déflecteur d'air (3) de la première position à une position optimale à l'aide d'un schéma de cartographie utilisant la première position comme entrée principale.

10. Système selon la revendication 9, dans lequel le contrôleur (30) est configuré pour utiliser la distance entre le déflecteur d'air (3) et la charge ou la remorque (2) comme entrée supplémentaire au schéma de cartographie.

11. Système selon une quelconque des revendications 9 à 10, dans lequel le système comprend en outre des moyens de mesure d'une vitesse actuelle du véhicule et dans lequel le contrôleur (30) est configuré pour utiliser la vitesse actuelle détectée du véhicule comme entrée supplémentaire au schéma de cartographie ou comme base pour fournir d'autres informations à utiliser comme signal d'entrée supplémentaire au schéma de cartographie.

12. Système selon une quelconque des revendications 10 à 11, dans lequel le système comprend en outre des moyens de mesure d'une direction du vent vers le véhicule (1) et dans lequel le contrôleur (30) est configuré pour utiliser la direction du vent détectée comme entrée supplémentaire au schéma de cartographie.

13. Système selon une quelconque des revendications 10 à 12, dans lequel le système comprend en outre des moyens pour déterminer la position du véhicule (1) à l'aide d'un système global de navigation ou de positionnement et dans lequel le contrôleur (30) est configuré pour utiliser la position déterminée du véhicule comme entrée supplémentaire pour le système de cartographie ou comme base pour fournir d'autres informations à utiliser comme signal d'entrée supplémentaire au schéma de cartographie.

14. Système selon une quelconque des revendications 10 à 13, dans lequel le capteur de distance (40) comprend au moins deux capteurs de distance disposés de telle sorte qu'au moins un capteur de distance soit dirigé vers la charge ou la remorque (2) lorsque le déflecteur d'air est positionné à la position optimale.

15. Système selon une quelconque des revendications 10 à 14, dans lequel le système de cartographie est fourni sous la forme d'une fonction exponentielle, d'une fonction polynomiale, d'une table de consultation ou d'un algorithme d'apprentissage automatique entraîné pour la relation entre la première position et la position optimale.
